# NEW EUROPEAN PATENT SPECIFICATION

(11) **EP 0 320 496 B2**
(45) Date of publication and mention of the opposition decision: **15.09.1999**
(45) Mention of the grant of the patent: 09.12.1992
(21) Application number: 89101861.6
(22) Date of filing: 15.01.1986
(51) Int. Cl.: A01J 7/00, A01K 1/12, A01J 5/017

(54) **Device for automatically milking animals**
Gerät zum automatischen Melken von Tieren
Dispositif de traîte automatique d'animaux

(30) Priority: 16.01.1985 NL 8500088
(43) Date of publication of application: 14.06.1989
(62) Divisional of application: 86200063.5
(73) Proprietor: MAASLAND N.V., 3155 PD Maasland (NL)
(72) Inventor: Van der Lely, Ary, Maasland (NL); Bom, Cornelis Johannes Gerardus, Rozenburg (NL)
(74) Representative: Corten, Maurice Jean F.M.

(56) References cited:
- EP-A- 0 091 892
- WO-A-85/02973
- FR-A- 2 159 370
- GB-A- 2 007 486
- SU-A- 1 014 540
- US-A- 3 763 828
- US-A- 4 010 714
- US-A- 4 508 058
- DE TELEGRAAF 04 December 1984, page T23 E.BOS: "LAND- EN TUINBOUW"
- LANDTECHNIK. vol. 35, no. 5, May 1980, HANNOVER DE pages 222 - 224; D.ORDOLFF: "MELKZEUGE AUTOMATISCH ANSETZEN - DEMNÄCHST WIRKLICHKEIT ?"
- Il Latte Vol. IX, 3/84, pages 206-218

## Description

The invention relates to a device for automatically milking animals, as described in the preamble of claim 1. Such a device is known from US-A 4,010,714.

In said US-document, an animal is forced into a fixed position in the milking parlour by means of supporting plates with air bags and further support members at the front side of the milking parlour. In that position, teat cups must be attached to the teats of the animal. In such a fixed position, the animals will not feel comfortable.

The invention has for its object to provide a device for automatically milking animals, such as cows, in which the position of the animal can be determined in a manner that the milking cluster can be attached efficiently, while the animal feels comfortable.

According to the invention this is achieved by the features as defined in claim 1.

Such mechanical sensors may be of a very light construction, so that it is hardly noticeable to the animal, the position of the mechanical sensors then being recorded and constituting an information on the basis of which the position of the animal can be determined.

According to a further characteristic of the invention, the mechanical sensors may be movable along the posterior of the animal, more specifically above the hind legs of the animal, for example on the most rearward portion of the animal. In this situation, according to a further characteristic of the invention, the mechanical sensors may be connected to a swivelling member which is capable of hinging around a substantially horizontal axis above the animal, the hinge axis being substantially transversely of the milking parlour. Then, according to a further characteristic of the invention, the mechanical sensors may rest against the posterior of the animal by its own weight, the angular position of the swiveling member then being a measure of the position of the animal. Additionally, according to a further characteristic of the invention, the mechanical sensors comprise rods, a first one of which can bear on the animal's side at the same level as the second one. In this situation, according to a further characteristic of the invention, the first rod can be fastened to the swiveling member and be at a substantially square angle to the second rod. By measuring the position of the animal's posterior in both the longitudinal direction and the lateral direction, sufficient information can be obtained to determine, depending on the animal (that is to say, using the data of the relevant animal, stored in the computer), the position of the udder.

The position and the place of each individual teat cup of the milking cluster may be adjustable depending on the position of the teats of a specific animal. This position may however alter, depending on a number of factors or depending on the age of the animal. To obviate this, means are provided which, during the milking operations, record the positions of the teat cups and store them as data, with the object of using these data during a subsequent milking operation of the same animal in such a way that before the milking cluster is placed on the udder, the position of the teat cups is adjusted in accordance with the previously recorded position during milking of the same animal. Thus also gradual changes in the position of the teats can be observed, whereafter the adjustment of the milking cluster for the relevant animal can be adapted thereto.

In the computer, which controls the means for positioning the milking cluster, a plurality of data of the animal to be milked may be stored. This data may contain the configuration (relative location and/or position) of the teats the position of the teats relative to a reference point, preferably one of the teats, the horizontal distance between the rear of the animal and a reference point near the udder, and/or the distance between a different detection point and the reference point, and the horizontally measured distance between the side of the animal and a reference point at the udder. From this data the computer can derive the relevant control signals for the means for positioning the milking cluster. Furthermore the computer can store the time elapsed between milking operations of the same animal. Such an information may be important in connection with the quantity of fodder the animals is fed during milking, but also in connection with the expected quantity of milk and the degree to which the udder is filled. This last item may affect the position and the location of the teats, so that these data can be taken into account in the determination of the actions to be performed for attaching the milking cluster.

By way of further illustration of the invention some embodiments of the automatic milking device will be described with reference to the accompanying drawing.
Figure 1 is a schematic plan view of the milking device;
Figure 2 is a side view of the milking device shown in Figure 1;
Figure 3 illustrates the milking cluster with support.

In these Figures corresponding components are given the same reference numerals.

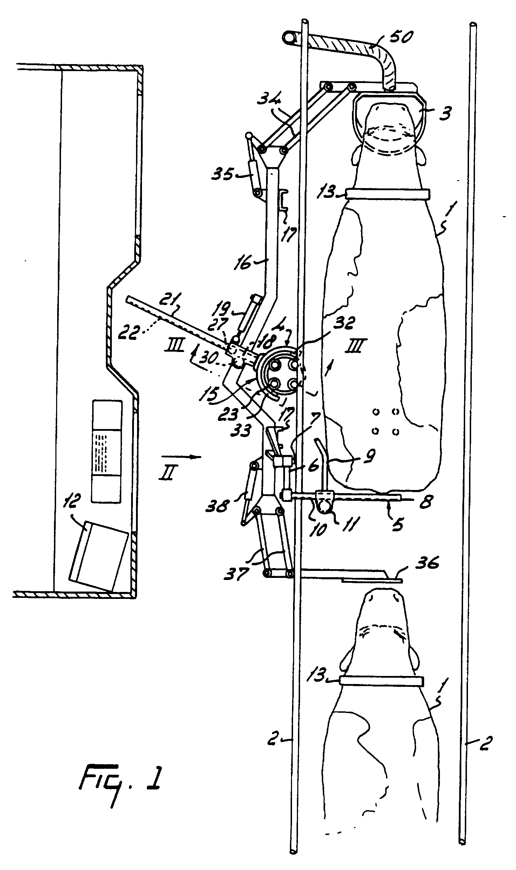

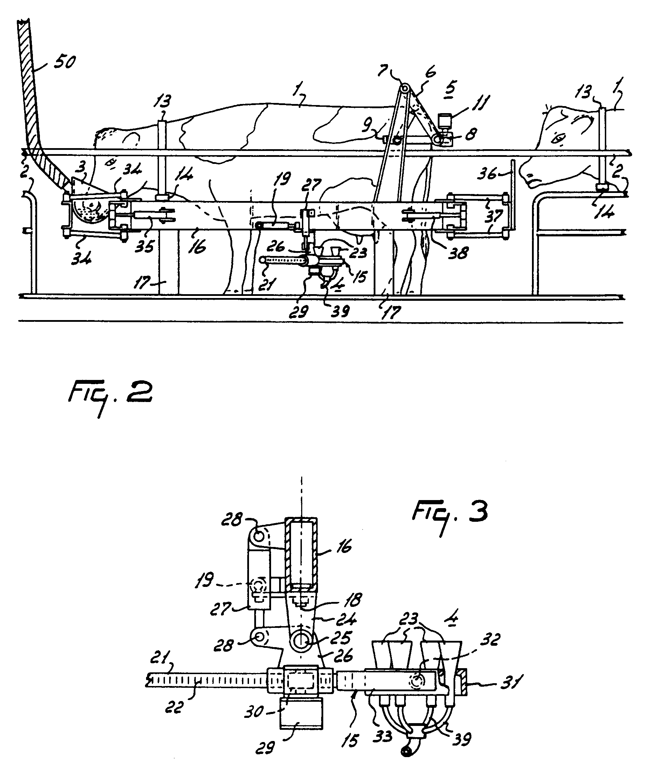

Figure 1 shows in a plan view a cow 1, stationed in the milking parlour. The milking parlour is bounded on both sides by guide rails 2, between which the animal can walk forwards until its head reaches the manger 3; the animal 1 will stop then. To enable correct positioning of the milking cluster 4 the position of the animal must be determined. A mechanism 5 is provided for this purpose, which comprises a swivel arm 6 which is capable of hinging around a substantially horizontal pin 7, and whose other end is provided with a rod like mechanical sensor 8 fastened to the swivel arm at a substantially square angle. The rod 8 has a movable mechanical sensor 9 which can be moved along the rod 8 until it comes to bear on the animal (as is shown in Figure 1). In the embodiments shown in the Figures 1 and 2, the rod 8 is provided with a toothed rack 10, whilst sensor 9 includes an electric motor 11. Thus, the sensor 9 is moved along the rod 8 until the sensor touches the animal 1, means, not further shown, being present for switching off the electric motor 11 when sensor 9 experiences a slight resistance during its travel. It will be obvious that using the sensor 9 the lateral position of the animal 1 can be determined. Prior to this determination, the rod 8 is rotated around a hinge pin 7, so that it bears against the posterior of the animal 1. The angular position then obtained for the swivel arm 6 determines the position of the cow in the forward direction. These data are conveyed to the computer 12, which is shown schematically in Figure 1. If it is furthermore known which cow is in the milking parlour, the computer can determine with an adequate degree of accuracy in what way the milking cluster 4 is to be attached.

To determine which animal is present in the milking parlour the animal carries identification means which, in the embodiments shown in the Figures 1 and 2, are constituted by an information carrier 14 fastened to a collar 13. This information carrier 14 is, for example, a small transmitter, whose signals can be picked up by a sensor connected to the computer and present in the milking parlour.

After it has been determined where the milking cluster 4 is to be connected, the milking cluster 4 can be moved to the relevant position with the aid of the support 15. For that purpose a frame 16 is provided which is fastened to the floor by means of legs 17. The support 15 is fastened capable of hinging, around the substantially vertical pin 18 to the frame 16; rotation around hinge pin 18 is effected by the adjusting device 19, for example a pneumatic or hydraulic cylinder unit. The support 15 includes a rod 21, having a toothed rack 22, with the aid of which the rod 21 can be moved in its longitudinal direction relative to the frame. Using these two displacement modes, swivelling around the vertical pin 18 and longitudinal movement of the rod 21, the milking cluster 4 can be adjusted to any desired position in a horizontal plane. Since the support 15 can also swivel around a substantially horizontal axis relative to the frame, adjustment of the milking cluster 4 in the vertical direction can be achieved. This last mode of adjustment is shown in detail in Figure 3.

Figure 3 shows the milking cluster 4 having four teat cups 23 which together are supported in the support 15. The hollow bar of the frame 16 is shown in a cross-sectional view. A support 24 is provided on this hollow bar 16, which support is capable of swiveling relative to the bar around the hinge pin 18, using an actuating device 19, which is only partly shown. The support 24 is connected to the support 15 by means of a substantially horizontal hinge pin 25, around which portion 26 of the support is swivable. This swivelling action is controlled by actuating device 27, which comprises, for example, a pneumatic or hydraulic cylinder and is connected by means of ball joints 28 to the frame 16 and also to portion 26 of the support. The portion 26 of the support 15 can consequently rotate around both the vertical pin 18 and the horizontal pin 25.

Additionally, Figure 3 shows the electric motor 29, for example a stepper motor, which has on its axle a pinion 30 which cooperates with the toothed rack 22 so as to move rod 21 in its longitudinal direction, causing the milking cluster 31 provided at the end of the rod 21 to be moved to under the animal. As can be seen from Figures 1 and 3, the milking cluster holder 31 is connected, capable of hinging around shaft 32, to the rod 21 through a fork 33, as a result of which the milking cluster holder remains at all times in a horizontal position. Using the described construction, the milking cluster can be adjusted to any desired position by means of an appropriate control of the adjusting devices 19 and 27, and the electric motor 29.

Figure 3 also shows the manner in which the teat cups 23 may be arranged in the milking cluster holder 31. The wider portion of the flaring teat cup 23 is supported in a recess of the milking cluster holder 31, so that the teat cups can be freely move up, thus getting free from the milking cluster holder 31. Releasing the cups from the milking cluster holder can be effected after the milking cluster has been attached to the udder and the vacuum has been generated, causing the teat cups to remain attached to the teats, by moving the milking cluster holder downwards. As the tubes 39 connecting the teat cups 23 to the milking machine are adequately flexible, the teat cups 23, after having been lifted from the milking cluster holder 31, have a certain degree of freedom to follow the motions of the animal. After milking has been terminated the vacuum is terminated, which causes the teat cups 23 to fall automatically back into said recesses in the milking cluster holder.

With the object of luring the animal 1 to the milking parlour and/or during milking, a computer-controlled quantity of fodder, for example concentrate, can be conveyed through pipe 50 to the manger 3. By means of a rod system 34 and an adjusting device 35, the manger 3 can be moved to a position outside the milking parlour. Thus, the animal can leave the milking parlour in the forward direction after milking has been terminated.

As is shown in Figures 1 and 2, the next animal is already present-between the guide rails 2, but at some distance from the milking parlour. This animal can move up to the milking parlour, lured there by the manger 3, after the mechanism 5 has been moved upwards around a hinge pin 7, and the partition 36 which is connected through the rod system 37 to the frame 16 has been moved to a position outside the guide rails by means of actuating device 38.

## Claims

1. Device for automatically milking animals, comprising a milking parlour, which is bounded on at least two sides by guide means (2), between which guide means (2) the animal can be positioned, the device further comprising means for positioning and attaching a milking cluster to the udder of the animal, characterized in that the device further comprises detection means which are suitable for determining the position of the posterior of the animal in both the longitudinal and lateral direction relative to the milking parlour, the detection means comprising two mechanical sensors (8, 9), which are constantly brought into contact with the animal body at least during the phase of the milking process in which the milking cluster has to be attached to the udder in order to determine the position of said posterior of the animal, a computer (12) is provided to which computer (12) first data indicating the position of said posterior of the animal relative to the milking parlour are supplied by the detection means, the device further comprising an animal identification system which supplies second data to the computer (12), the said second data indicate the identity of the animal present in the milking parlour, while furthermore third data indicating the position of the udder of the animal relative to the position of said posterior of the animal are stored in the computer (12) and the computer (12) controls the means for positioning and attaching the milking cluster in response to the first, second and third data.

2. Device as claimed in claim 1, characterized in that the mechanical sensors (8, 9) are movable along the posterior of the animal, more specifically above the hind legs of the animal, for example on the most rearward position of the animal.

3. Device as claimed in claim 2, characterized in that the mechanical sensors (8, 9) are connected to a swivelling member (6) which is capable of hinging around a substantially horizontal axis (7) above the animal.

4. Device as claimed in claim 3, characterized in that the mechanical sensors (8, 9) rest against the posterior of the animal by its own weight, the angular position of the swivelling member (6) then being a measure of the position of the animal.

5. Device as claimed in claim 3 or 4, characterized in that the mechanical sensors comprise rods (8, 9), a first one (9) of which can bear on the animal's side at the same level as the second one (8), which first rod (9) can be fastened to the swivelling member (6) and be at a substantially square angle to the second rod (8).

## Patentansprüche

1. Vorrichtung zum automatischen Melken von Tieren, mit einem Melkstand, der auf wenigstens zwei Seiten durch Leiteinrichtungen (2) begrenzt ist, zwischen denen das Tier positionierbar ist, wobei die Vorrichtung ferner eine Einrichtung zum Positionieren und Anbringen eines Melkgeschirrs am Euter des Tieres aufweist,
dadurch gekennzeichnet, daß die Vorrichtung ferner eine Erkennungseinrichtung aufweist, die dazu ausgelegt ist, sowohl in Längsrichtung als auch in Querrichtung die Position des Hinterteils des Tieres relativ zum Melkstand zu ermitteln, wobei die Erkennungseinrichtung zwei mechanische Sensoren (8, 9) aufweist, die wenigstens während der Phase des Melkvorgangs, in der das Melkgeschirr an dem Euter angebracht sein muß, stets mit dem Körper des Tieres in Berührung gebracht sind, um die Position des Hinterteils des Tieres zu bestimmen, wobei ein Computer (12) vorgesehen ist, an den von der Erkennungseinrichtung erste Daten bezüglich der Position des Hinterteils des Tieres relativ zum Melkstand geliefert werden, wobei die Vorrichtung ferner ein Tieridentifiziersystem aufweist, das zweite Daten an den Computer (12) liefert, die Auskunft über die Identität des im Melkstand befindlichen Tieres geben, wobei ferner dritte Daten bezüglich der Position des Euters des Tieres relativ zur Position des Hinterteils des Tieres in dem Computer (12) gespeichert sind und der Computer (12) als Reaktion auf die ersten, zweiten und dritten Daten die Einrichtung zum Positionieren und Anbringen des Melkgeschirrs steuert.

2. Vorrichtung nach Anspruch 1,
dadurch gekennzeichnet, daß die mechanischen Sensoren (8, 9) längs des Hinterteils des Tieres, genauer gesagt über den Hinterbeinen des Tieres, zum Beispiel an der hintersten Stelle des Tieres beweglich sind.

3. Vorrichtung nach Anspruch 2,
dadurch gekennzeichnet, daß die mechanischen Sensoren (8, 9) mit einem Schwenkelement (6) verbunden sind, das um eine im wesentlichen horizontale Achse (7) über dem Tier schwenkbar ist.

4. Vorrichtung nach Anspruch 3,
dadurch gekennzeichnet, daß die mechanischen Sensoren (8, 9) durch ihr Eigengewicht an dem Hinterteil des Tieres anliegen, wobei die winkelmäßige Position des Schwenkelements (6) dann ein Maß für die Position des Tieres bildet.

5. Vorrichtung nach Anspruch 3 oder 4,
dadurch gekennzeichnet, daß die mechanischen Sensoren Stangen (8, 9) umfassen, von denen eine erste (9) auf demselben Niveau wie die zweite (8) gegen die Seite des Tieres drücken kann, wobei die erste Stange (9) an dem Schwenkelement (6) anbringbar ist und sich im wesentlichen in einem rechten Winkel zu der zweiten Stange (8) anordnen läßt.

## Revendications

1. Dispositif pour traire automatiquement des animaux, comprenant une stalle de traite bornée sur au moins deux côtés par des moyens de guidage (2) entre lesquels l'animal peut être positionné, ce dispositif comprenant en outre des moyens pour positionner et attacher un groupe de ventouses de traite au pis de l'animal, caractérisé en ce que le dispositif comprend en outre des moyens de détection aptes à déterminer la position du postérieur de l'animal aussi bien dans la direction longitudinale que la direction latérale par rapport à la stalle de traite, les moyens de détection comprenant deux capteurs mécaniques (8, 9) qui sont amenés en contact constant avec le corps de l'animal, tout au moins au cours de la phase de l'opération de traite dans laquelle le groupe de ventouses de traite doit être attaché au pis de l'animal pour déterminer la position dudit postérieur de l'animal, tandis qu'un ordinateur (12) est prévu auquel des premières données indiquant la position dudit postérieur de l'animal par rapport à la stalle de traite sont fournies par les moyens de détection, le dispositif comprenant en outre un système d'identification de l'animal fournissant des deuxièmes données à l'ordinateur (12), les deuxièmes données indiquant l'identité de l'animal présent dans la stalle de traite, tandis qu'en outre des troisièmes données indiquant la position du pis de l'animal par rapport à la position dudit postérieur de l'animal sont gardées en mémoire dans l'ordinateur (12), cet ordinateur (12) commandant les moyens pour positionner et attacher le groupe de ventouses de traite en réponse aux premières, secondes et troisièmes données.

2. Dispositif selon la revendication 1, caractérisé en en que les capteurs mécaniques (8, 9) sont mobiles le long du postérieur de l'animal, plus spécifiquement au dessus des pattes postérieures de l'animal, par exemple sur la position la plus à l'arrière de l'animal.

3. Dispositif selon la revendication 2, caractérisé en ce que les capteurs mécaniques (8, 9) sont reliés à un organe pivotant (6) qui est capable de pivoter autour d'un axe (7) sensiblement horizontal au dessus de l'animal.

4. Dispositif selon la revendication 3, caractérisé en ce que les capteurs mécaniques (8, 9) reposent contre le postérieur de l'animal par leur propre poids, la position angulaire de l'organe pivotant (6) étant alors une mesure de la position de l'animal.

5. Dispositif selon la revendication 3 ou 4, caractérisé en ce que les capteurs mécaniques comprennent des tiges (8, 9), une première (9) de celles-ci pouvant porter sur le flanc de l'animal au même niveau que la deuxième (8), cette première tige (9) pouvant être attachée à l'organe pivotant (6) et être sensiblement à angle droit par rapport à la deuxième tige (8).
